# EUROPEAN PATENT APPLICATION

(11) **EP 4 804 579 A1**
(43) Date of publication of application: **09.09.2026**
(21) Application number: 26162070.2
(22) Date of filing: 03.03.2026
(51) Int. Cl.: H04W 4/80

(54) **SYSTEMS AND METHODS FOR EFFICIENT POWER AND BANDWIDTH UTILIZATION DURING BLUETOOTH LOW ENERGY ACTIVE SCANS**

(30) Priority: 04.03.2025 US 202519069745
(71) Applicant: Avago Technologies International Sales Pte. Limited, Singapore 768923 (SG)
(72) Inventor: Agrawal, Amit, Irvine, 92618 (US); Shetiya, Harish, Irvine, 92618 (US); Devulapalli, Amrit Swarup, Irvine, 92618 (US); Narahari, Mani Teja Swaroop, Irvine, 92618 (US)
(74) Representative: Dilg, Haeusler, Schindelmann Patentanwaltsgesellschaft mbH

(57) **Abstract**

The disclosure describes systems and methods for efficient power and bandwidth utilization during Bluetooth low energy active scans between scanners and advertisers. A scanner, via a Bluetooth controller coupled with a host processor, can identify attributes of advertisers based on advertisement packets received via Bluetooth. The scanner can store the attributes for each advertiser in a data structure. Upon receiving an advertisement packet from an advertiser, the scanner can search the stored attributes and determine a score for the advertiser. Based on the score, the scanner can determine whether to suppress the transmission of a scan request, transmit the scan request at a specific priority, or adjust transmit power of the scan request.

## Description

### FIELD OF THE DISCLOSURE

This disclosure generally relates to systems and methods for wireless communication between Bluetooth low energy (BLE) devices, including, without limitation, efficient power and bandwidth utilization during BLE active scans between scanners and advertisers.

### BACKGROUND

The market for wireless communications devices has been growing due to increased use of portable devices, increased connectivity, and data transfer between all manners of devices. Digital switching techniques have facilitated the large-scale deployment of affordable, easy-to-use wireless communication networks. Wireless communication can operate in accordance with various standards, such as the IEEE 802.11x (e.g., Wi-Fi technology), Bluetooth, global system for mobile communications (GSM), and code division multiple access (CDMA). Using such technologies, wireless communication devices can connect to local area networks and the internet without physical cables, communicating over radio frequencies and across various spaces and ranges.

### SUMMARY

The technical solutions of the present disclosure are directed to efficient power and bandwidth utilization during Bluetooth low energy (BLE) active scans between scanners and advertisers. BLE is a low-power wireless communication technology that operates in the 2.4 GHz band. BLE is configured for short-range data exchange between devices and prioritizes energy efficiency over high data rates. BLE connectivity is utilized across various technologies, including location-based services, wearable communications, and proximity-based systems, among others. In a BLE network, advertisers periodically transmit advertisement packets, including device and service information, and scanners monitor these advertisement packets to discover and connect to advertisers. During BLE active scans, a scanner transmits a scan request packet to request additional details from an advertiser upon receiving a scannable advertisement packet. However, the transmission of scan request packets can occur before the application of host-configured filters, such as packet content filters and whitelist filters, on the received advertisement packet data. Furthermore, the scanner transmits scan request packets for every scannable advertisement, regardless of the advertiser's relevance. In a BLE environment where multiple advertisers transmit scannable advertisements that are irrelevant to the scanner, the continuous transmission of scan request packets can result in excessive bandwidth consumption and increased power usage. The repeated transmission activity can also reduce the effective duty cycle of the BLE scan by occupying time that could otherwise be used to receive packets from advertisers of interest. Consequently, active scans can consume significant bandwidth and interfere with concurrent tasks, such as Wi-Fi communication and other Bluetooth profiles. Such bandwidth contention can adversely affect applications with high bandwidth and low latency demands, including real-time gaming and interactive streaming services. These inefficiencies in BLE active scan management present challenges in maintaining enhanced resource utilization across devices that demand continuous connectivity and responsiveness.

The technical solutions disclosed herein address inefficiencies in BLE active scans by enhancing power and bandwidth utilization through advertiser evaluation and scan request management. For example, a scanner can implement an on-controller evaluation process within the Bluetooth controller to determine the relevance of a particular advertiser prior to forwarding the advertisement packet information to the host processor or initiating the transmission of a scan request packet to the advertiser. The on-controller evaluation can reduce power consumption by minimizing unnecessary host processor wakeups and redundant scan request transmissions. The Bluetooth controller can maintain a data structure configured to store attributes associated with previously received advertisement packets from one or more advertisers. Upon receiving a scannable advertisement packet, the Bluetooth controller can search the data structure for a matching advertiser address and, if a match is identified, compute a score indicating the relevance of the advertiser based on the associated attributes. The computed score can quantify relevance on a predefined scale, such as 1 to 10, allowing the Bluetooth controller to autonomously determine and execute subsequent actions based on the relevance. Based on the score, the Bluetooth controller can execute one of several operations to enhance resource utilization. For low scores, the Bluetooth controller can suppress/prevent/block the transmission of the scan packet to minimize antenna usage and reduce power and bandwidth consumption. For moderate scores, the Bluetooth controller can lower the transmit power of the scan request packet to conserve power while still maintaining communication reliability. For high scores, the controller can request a high-priority grant for antenna access from the host processor to facilitate timely transmission of scan requests for high-relevance advertisers.

Furthermore, to account for dynamic changes in advertiser information, the Bluetooth controller can be configured to periodically re-evaluate entries stored in the data structure by transmitting scan request packets to advertisers with previously assigned low scores. Such periodic re-evaluations can allow the Bluetooth controller to detect updates in subsequent advertisement data or scan response data from the advertiser that can affect relevance assessment over time. Additionally, reducing the frequency of scan request transmissions can enhance coexistence performance with wireless local area network (WLAN) protocols by reducing antenna contention and improving WLAN throughput. Furthermore, the reduction in transmit power consumption can benefit the controller and the host processor by avoiding frequent advertisement report processing and unnecessary processor wakeups. As a result, the technical solutions described here can improve BLE and WLAN efficiency in combo-chip architectures, reducing overall BLE power consumption while supporting simultaneous wireless communication operations.

At least one aspect of the technical solutions is directed to a system for efficient power and bandwidth utilization during Bluetooth low energy active scans. The system can include one or more processors coupled with memory. The system can identify one or more attributes of one or more advertisers based at least on one or more advertisement packets received, via Bluetooth, from the one or more advertisers. The system can store the one or more attributes for each of the one or more advertisers. The system can receive, from an advertiser of the one or more advertisers, an advertisement packet. The system can determine, based at least on the one or more attributes of the advertiser, a score of the advertiser. The system can determine, based at least on the score, to suppress transmission of a scan request.

In some embodiments, the system can determine a priority of the advertiser based at least on the score of the advertiser being within one or more predefined ranges of values, where each predefined range of values corresponds to a respective priority. The system can suppress the transmission of the scan request based at least on the determined priority. In some embodiments, the system can define the one or more predefined ranges of values for determining the priority using one or more thresholds. In some embodiments, the system can receive, from a second advertiser of the one or more advertisers, a second advertisement packet. The system can determine, based at least on one or more attributes of the second advertiser, a score of the second advertiser. The system can determine, based at least on the score, to transmit a second scan request at a priority. In some embodiments, the system can transmit the second scan request at a first priority based at least on the score of the second advertiser satisfying a predefined range of values associated with the first priority. In some embodiments, the system can transmit the second scan request at a second priority based at least on the score of the second advertiser satisfying a predefined range of values associated with the second priority, where the second priority is distinct from a first priority.

In some embodiments, the one or more attributes can include at least one of an advertiser's Bluetooth device address, a verdict of a packet content filter history of a given advertisement, a hash computed on advertisement data, or a timestamp of a last received advertisement. In some embodiments, the system can maintain a data structure configured to store associations between advertiser addresses and the one or more attributes of the one or more advertisers. In some embodiments, upon receiving the advertisement packet from the advertiser, the system can identify an entry in the data structure matching an advertiser address of the advertiser and retrieve the one or more attributes associated with the matching advertiser address entry. In some embodiments, the system can initiate a timer upon suppressing the transmission of the scan request. Upon expiration of the timer, the system can determine, based at least on receiving a second advertisement packet or a scan response from the advertiser of the one or more advertisers, to one of suppressing transmission of a subsequent scan request or transmitting the subsequent scan request at a priority.

Another aspect of the technical solutions is directed to a device for efficient power and bandwidth utilization during Bluetooth low energy active scans. The device can include a Bluetooth controller coupled with a host processor. The Bluetooth controller can store one or more attributes of one or more advertisers based at least on one or more advertisement packets received from the one or more advertisers. The Bluetooth controller can receive, from an advertiser of the one or more advertisers, an advertisement packet. The Bluetooth controller can determine a score of the advertiser based at least on the one or more attributes of the advertiser. The Bluetooth controller can determine, based at least on the score, to transmit a scan request at a priority.

In some embodiments, the Bluetooth controller can determine a priority of the advertiser based at least on the score of the advertiser being within one or more predefined ranges of values, where each predefined range of values corresponds to a respective priority. The Bluetooth controller can transmit the scan request based at least on the determined priority. In some embodiments, the Bluetooth controller can define the one or more predefined ranges of values for determining the priority using one or more thresholds. In some embodiments, the Bluetooth controller can adjust transmit power of the scan request based at least on the determined priority. In some embodiments, the Bluetooth controller can transmit the scan request at a first priority based at least on the score of the advertiser satisfying a predefined range of values associated with the first priority. In some embodiments, the Bluetooth controller can transmit the scan request at a second priority based at least on the score of the advertiser satisfying a predefined range of values associated with the second priority, where the second priority is distinct from a first priority.

In some embodiments, the one or more attributes can include at least one of an advertiser's Bluetooth device address, a verdict of a packet content filter history of a given advertisement, a hash computed on advertisement data, or a timestamp of a last received advertisement. In some embodiments, the Bluetooth controller can maintain a data structure configured to store associations between advertiser addresses and the one or more attributes of the one or more advertisers. In some embodiments, upon receiving the advertisement packet from the advertiser, the Bluetooth controller can identify an entry in the data structure matching an advertiser address of the advertiser and retrieve the one or more attributes associated with the matching advertiser address entry. In some embodiments, upon transmitting the scan request, the Bluetooth controller can initiate a timer. Upon expiration of the timer, the Bluetooth controller can determine, based at least on receiving a second advertisement packet or a scan response from the advertiser of the one or more advertisers, to one of suppressing transmission of a subsequent scan request or transmitting the subsequent scan request at the priority.

Yet another aspect of the technical solutions is directed to a method for efficient power and bandwidth utilization during Bluetooth low energy active scans. The method can include identifying, by a Bluetooth controller, one or more attributes of one or more advertisers based at least on one or more advertisement packets received from the one or more advertisers. The method can include storing, by the Bluetooth controller, the one or more attributes for each of the one or more advertisers. The method can include receiving, from an advertiser of the one or more advertisers, an advertisement packet. The method can include determining, by the Bluetooth controller, based at least on the one or more attributes of the advertiser, a score of the advertiser. The method can include determining, by the Bluetooth controller, based at least on the score, to one of suppressing transmission of a scan request, transmitting the scan request at a priority, or adjusting transmit power of the scan request.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1A illustrates a block diagram depicting a network environment including one or more access points in communication with one or more devices or stations, in accordance with one or more embodiments.
FIGS. 1B and 1C illustrate block diagrams depicting computing devices useful in connection with the methods and systems described herein, in accordance with one or more embodiments.
FIG. 2 illustrates an example block diagram of a system for efficient power and bandwidth utilization during Bluetooth low energy active scans, in accordance with one or more embodiments.
FIG. 3 illustrates an example flow diagram of a method for efficient power and bandwidth utilization during Bluetooth low energy active scans, in accordance with one or more embodiments.
FIG. 4 illustrates another example flow diagram of a method for efficient power and bandwidth utilization during Bluetooth low energy active scans, in accordance with one or more embodiments.

### DETAILED DESCRIPTION

The following IEEE standard(s), including any draft versions of such standard(s), are hereby incorporated herein by reference in their entirety and are made part of the present disclosure for all these purposes: WiFi Alliance standards and IEEE 802.11 standards, including but not limited to IEEE 802.11a^{™}, IEEE 802.11b^{™}, IEEE 802.11g^{™}, IEEE P802.11n^{™}; IEEE P802.11ac^{™}; and IEEE P802.11be^{™} through IEEE P802.11bn^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
- Section A describes a network environment and computing environment that can be useful for practicing embodiments described herein; and
- Section B describes systems and methods for efficient power and bandwidth utilization during Bluetooth low energy active scans.

### A. Computing and Network Environments

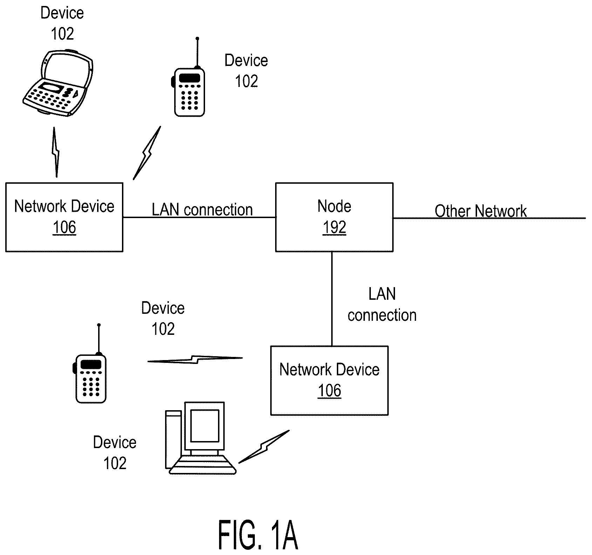

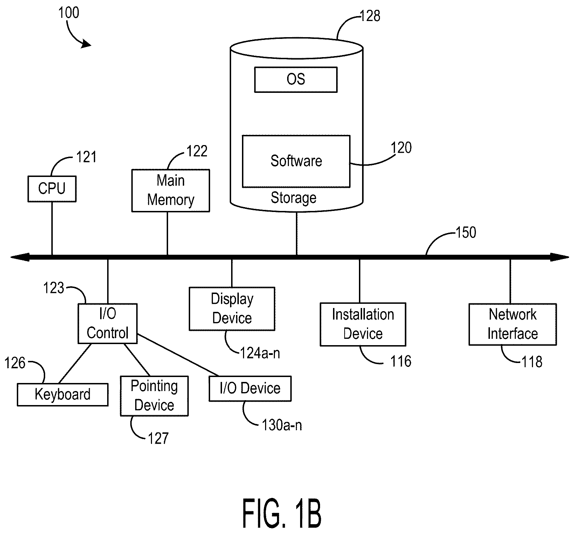

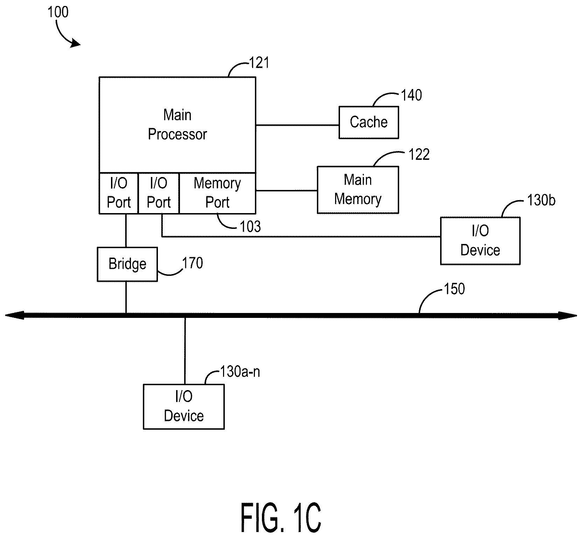

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using Wi-Fi or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other communication devices 102 to utilize that wired connection. A network device 106 or AP can be implemented to support a standard for sending and receiving data using one or more radio frequencies. Those standards and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency-based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an input/output (I/O) controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more I/O devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above-described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with the main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screens, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, a USB device, a hard drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect, or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smartphone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

### B. Systems and Methods for Efficient Power and Bandwidth Utilization During Bluetooth Low Energy Active Scans

Below are detailed descriptions of various concepts related to, and embodiments of, techniques, approaches, methods, apparatuses, and systems for efficient power and bandwidth utilization during Bluetooth low energy active scans. The various concepts introduced above and discussed in greater detail below may be implemented in any of numerous ways, as the described concepts are not limited to any particular manner of implementation. Examples of specific embodiments and applications are provided primarily for illustrative purposes.

Bluetooth Low Energy (BLE) provides short-range wireless communication using radio waves in the 2.4 GHz band, thereby prioritizing low energy consumption. BLE devices perform advertising, scanning, and connecting to establish and maintain wireless communication. An advertiser periodically transmits advertisement (ADV) packets to announce its presence and available services. A scanner listens for these ADV packets to discover nearby advertisers. Scanners can perform active or passive scanning. In active scanning, upon receiving an ADV packet, the scanner transmits a scan request packet to the advertiser and receives a scan response packet including additional information. In passive scanning, the scanner only listens for ADV packets without sending any requests. Once a scanner identifies a relevant advertiser, the scanner may initiate a connection by transmitting a connection request packet. However, continuous BLE scanning can consume significant power and bandwidth. Such configurations also lead to interference with other wireless protocols operating in the same frequency band, particularly Wi-Fi. Because Wi-Fi and Bluetooth often share the same antenna and operate in the 2.4 GHz band, inefficient coexistence mechanisms can degrade the performance of both. While BLE scanning plays an important role in low-power device discovery and service utilization, certain Wi-Fi applications, such as online gaming and video streaming, demand high bandwidth and low latency. As a result, managing resource allocation between these two technologies is important to maintain efficient system performance.

The technical solutions disclosed herein improve power and bandwidth efficiency during BLE active scans by implementing enhanced advertiser evaluation and scan request management. A Bluetooth controller, coupled with a host processor within a scanner, can autonomously process and filter incoming advertisement packets to reduce unnecessary transmissions and host processor wakeups, thereby conserving power and bandwidth resources. The Bluetooth controller can identify one or more attributes of multiple advertisers based on advertisement packets received via Bluetooth communication. These attributes can include the advertiser's device address, packet metadata, or historical filtering results. Upon identifying and extracting attributes from an advertisement packet, the Bluetooth controller can store the extracted attributes in a data structure. The data structure can function as a reference for future evaluations, allowing the Bluetooth controller to efficiently compare newly received advertisement packets with previously processed information.

When a new advertisement packet is received from an advertiser, the Bluetooth controller can search the data structure for a matching entry and determine subsequent actions based on stored attributes. The Bluetooth controller can calculate a relevance score for the advertiser using the stored attributes. The score can quantify the advertiser's relevance based on preconfigured criteria, such as recent activity, service relevance, or packet content. The computed score can guide subsequent operations. For advertisers with low scores, the Bluetooth controller can suppress the transmission of a scan request packet, thereby minimizing antenna usage and reducing power consumption. For advertisers with moderate or high scores, the controller may transmit a scan request packet or adjust transmission parameters to support efficient resource allocation and coexistence with other wireless protocols. As a result, the disclosed technical improvements can reduce power consumption and improve resource efficiency during BLE active scans.

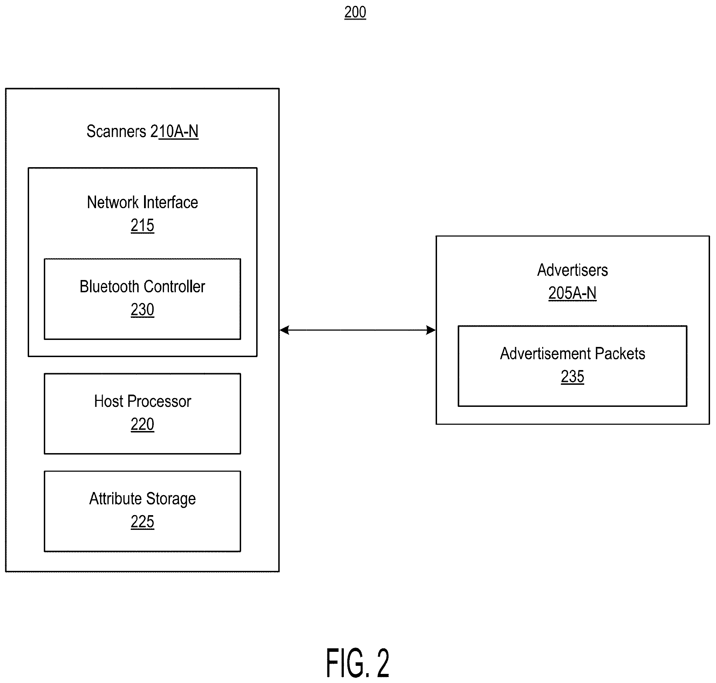

FIG. 2 illustrates an example system 200 for efficient power and bandwidth utilization during Bluetooth low energy (BLE) active scans. Example system 200 can include one or more advertisers 205A-205N (sometimes referred to herein as an advertiser 205) communicatively coupled with one or more scanners 210A-210N (sometimes referred to herein as a scanner 210) via one or more Bluetooth wireless communication channels. Any of the systems described in connection with FIGS. 1A-1C can be configured, constructed, or implemented to implement, operate, and/or use any of the options and techniques described in FIG. 2.

The advertiser 205 can be any device, apparatus, system, or combination of hardware and software configured to transmit advertisement packets 235 to facilitate discovery and communication with scanners 210. The terms advertisers 205 and advertiser devices 205 can be used interchangeably. In the context of Bluetooth low energy (BLE) communication, the advertiser 205 can be referred to herein as a BLE advertiser device 205 that operates according to the Bluetooth low energy specification and can be configured for low power consumption. The advertiser 205 can include devices that support various Bluetooth profiles or communication modes. The advertiser 205 can be a dedicated advertising device, or the advertiser 205 can be a multi-functional device that includes advertising functionality as one of its features. In some embodiments, the advertiser 205 can be a low-power device configured for broadcasting advertisement packets 235, such as a beacon or a sensor. In some embodiments, the advertiser 205 can be a more complex device, such as a smartphone, smartwatch, tablet, laptop, computer, smart home hub, medical device, or industrial controller, which uses advertisement packets 235 to announce its presence or provide information relevant to its functionality. The advertiser 205 can be battery-powered, line-powered, or powered by a combination of sources. In some embodiments, the advertiser 205 can support different advertising modes, such as connectable and non-connectable advertising. The advertiser 205 can implement various power-saving techniques, such as adjusting advertising intervals based on various criteria.

The advertiser 205 can transmit or broadcast one or more advertisement packets 235 over Bluetooth communication channels. The Bluetooth communication channels can refer to specific radio frequency channels within the 2.4 GHz band used by the advertiser 205 to periodically broadcast its advertisement packets 235. In the context of BLE communication, the advertisement packets 235 can be referred to herein as BLE advertisement packets 235. The advertisement packets 235 are data packets that conform to the Bluetooth low energy specification and announce the presence of an advertiser 205. The advertisement packets 235 can facilitate BLE communication, allowing the advertiser 205 to announce its presence and share data with nearby devices. The advertisement packets 235 transmitted by the advertiser 205 can include various attributes, including, but not limited to, the advertiser's Bluetooth device address (BD_ADDR), device name, transmit power level, service indicators, manufacturer-specific data, and data related to the specific function or application of the advertiser 205. The advertiser 205 can transmit advertisement packets 235 at regular intervals, or the advertiser 205 can transmit advertisement packets 235 based on events or triggers. The transmission interval and the content of the advertisement packets 235 can be configurable.

The scanner 210 can be any device, apparatus, system, or combination of hardware and software configured to receive and process Bluetooth advertisement packets 235. The scanner 210 can include a wide range of devices, from dedicated scanning devices to multi-functional devices with Bluetooth capabilities. The scanner 210 can be a mobile device (such as a smartphone, tablet, or laptop), a stationary device (such as a desktop computer, smart home hub, or industrial controller), or an embedded system integrated into another device or system. The scanner 210 can implement various scanning techniques, including passive scanning (listening for advertisements without transmitting scan requests) and active scanning (transmitting scan requests to solicit additional information from advertisers). During BLE active scanning, the scanner 210 can transmit a scan request packet after receiving an advertisement packet from an advertiser 205. The advertiser 205, upon receiving the scan request packet, can respond with a scan response packet, including additional information (e.g., available services, manufacturer-specific data, or sensor readings), to allow the scanner to obtain detailed information about the advertiser 205. The scanner 210 can be configured to scan for advertisements on specific Bluetooth channels or across various available channels. The scanner 210 can be configured to detect and process advertisement packets 235 from one or more Bluetooth devices, including those advertising different types of data or supporting different Bluetooth profiles. The scanner 210 can use the received advertisement data for various purposes, such as device discovery, proximity detection, location services, data collection, or interaction with nearby Bluetooth devices. The scanner 210 can be powered by a battery, a power source, or a combination of both. The scanner 210 can be configured to filter or prioritize received advertisement packets 235 based on various criteria, such as signal strength, advertiser address, or data content.

The scanner 210 can include, interface with, communicate with, or otherwise utilize a network interface 215. The network interface 215 can include hardware and/or software components that facilitate the transmission and reception of radio frequency (RF) signals, including those used for Bluetooth communication. The network interface 215 can include one or more antennas to enhance the reception of advertisement packets 235 and support Bluetooth transmission. The network interface 215 can incorporate one or more RF transceivers capable of operating within the 2.4 GHz band used by Bluetooth. The network interface 215 can operate at a physical (PHY) layer, managing the transmission and reception of the RF signals that carry the advertisement packets 235. The network interface 215, via the RF transceivers, can manage signal encoding/decoding and modulation/demodulation. The network interface 215 can convert digital data into RF signals for transmission via the antenna and can convert received RF signals back into digital data. The network interface 215 can provide the physical communication medium for its components to exchange data. In some embodiments, the network interface 215 can support Wi-Fi communication. In some embodiments, the network interface 215 can provide coverage for Bluetooth and Wi-Fi. For Wi-Fi communication, the network interface 215 can include RF transceivers operating at 2.4 GHz, 5 GHz, and/or 6 GHz, supporting various IEEE 802.11 standards.

The scanner 210 can include, interface with, communicate with, or otherwise utilize a host processor 220. The host processor 220 can be a central processing unit (CPU) or a more complex system-on-a-chip (SoC) within the scanner 210. The host processor 220 can be configured to execute higher-level software applications and manage system operations. The host processor 220 can include hardware components, such as one or more processing cores, memory, and peripheral interfaces, and can execute an operating system along with various application software. In the context of Bluetooth communication, the host processor 220 can utilize the data received from the Bluetooth controller 230. The Bluetooth controller 230, after processing received advertisement packets 235, can transmit the extracted information to an application executed by the host processor 220. The application can utilize the advertisement data for various purposes, including, but not limited to, displaying information about nearby advertisers 205 to a user, logging advertisement data for analysis, triggering actions based on received advertisement data, or establishing connections with specific advertisers 205. The host processor 220 can manage communication with other components of the scanner 210, such as the network interface 215 (for Wi-Fi or other network communication), user input devices, and display outputs. The host processor 220 can implement application logic, manage complex communication protocols, and facilitate user interface interactions related to Bluetooth functionality. The host processor 220 can run various applications, including those that utilize the Bluetooth connection with an advertiser 205. The host processor 220 can coordinate power consumption between components of the scanner 210, such as the Bluetooth controller 230 and the network interface 215, to manage the power usage of the scanner 210.

The scanner 210 can include, interface with, communicate with, or otherwise utilize attribute storage 225. The attribute storage 225 can be a computer-readable memory that can store and maintain data associated with the advertisers 205. The data can include various attributes associated with the advertisers 205, such as the advertiser's Bluetooth device address (BD_ADDR), a verdict of a packet content filter history, a hash computed on advertisement data, and a timestamp of the last received advertisement, for maintaining a history of previously received advertisement packets from various advertisers 205. The advertiser's BD_ADDR can be an identifier assigned to each Bluetooth device for identifying and distinguishing between different advertisers 205. The advertiser's BD_ADDR can be used for associating other attributes with the correct advertiser 205. The verdict of a packet content filter history can store the result of applying a content filter to previously received advertisement packets 235 from a given advertiser 205. The verdict of a packet content filter history can record whether previous packets passed or failed the filter. The hash computed on advertisement data can include a cryptographic hash function applied to advertisement data to generate a hash value for comparing newly received advertisement data with previously seen data without having to store and compare the entire advertisement packet. The timestamp of the last received advertisement can record the time when the last advertisement packet 235 was received from a particular advertiser 205 for tracking the advertiser's activity and estimating the advertiser's transmission frequency.

The attribute storage 225 can be implemented using one or more data structures for efficient data access and retrieval. These data structures can include, but are not limited to, lookup tables, hash tables, linked lists, trees, or database tables. The attribute storage 225 can be implemented internally within the scanner 210. In some embodiments, the attribute storage 225 can be distributed across multiple systems or reside in a cloud environment. The attribute storage 225 can be managed by a database management system or other suitable software to provide efficient data access, retrieval, and updates. The data stored can be organized and indexed to facilitate rapid lookups based on different criteria, such as BD_ADDR or other attribute values. For example, the attribute storage 225 can maintain entries for each advertiser 205, where each entry associates a BD_ADDR with the corresponding packet content filter verdict, computed hash, and last received timestamp, among other attributes.

The network interface 215 can include, interface with, communicate with, or otherwise utilize a Bluetooth controller 230. The Bluetooth controller 230 can be a component, implemented in hardware, firmware, and/or software, configured to manage Bluetooth-related functions within the scanner 210. The Bluetooth controller 230 can be coupled with the host processor 220 and can transmit processed advertisement data to the firmware executing on the host processor 220. The Bluetooth controller 230 can execute a Bluetooth protocol stack. The Bluetooth controller 230 can manage communication at the link layer (including a logical link control and adaptation protocol (L2CAP)) and a baseband layer (including a media access control (MAC) sublayer). The Bluetooth controller 230 can interact with the network interface 215 to transmit and receive Bluetooth data as RF signals. The Bluetooth controller 230 can manage tasks, such as device discovery, connection establishment, data packet handling, link management, security, and power control. The Bluetooth controller 230 can be a separate chip or module within the scanner 210, or its functionality can be integrated into a larger system-on-a-chip (SoC). The Bluetooth controller 230 can be configured to support various Bluetooth versions and profiles, including Bluetooth low energy. The Bluetooth controller 230 can implement various power management techniques to reduce energy consumption.

The Bluetooth controller 230 can process advertisement packets 235, extract relevant information, and execute operations based on the advertisement metadata. The Bluetooth controller 230 can identify one or more attributes associated with each advertiser 205 from the advertisement packets 235 received via the network interface 215. For example, upon receiving an advertisement packet 235, the Bluetooth controller 230 can parse the advertisement packet 235 according to the Bluetooth specification to extract various protocol fields, including the packet type, header information, address fields, and the payload data. The Bluetooth controller 230 can then identify several attributes of the advertiser 205 from the parsed data fields. For example, the Bluetooth controller 230 can identify the advertiser's BD_ADDR from the advertisement packet 235 to identify and differentiate advertisers 205 and to associate other attributes with the correct advertiser 205. The Bluetooth controller 230 can also identify the verdict of a packet content filter history to determine whether subsequent interactions with the advertiser 205 are warranted, based on whether previous advertisement packets from the advertiser 205 have passed or failed a content filter. For example, if the advertisement packets 235 from a particular advertiser 205 have repeatedly failed the content filter, the Bluetooth controller 230 can classify the advertiser 205 as non-prioritized and suppress further interactions.

In some embodiments, upon receiving a first instance of an advertisement packet 235 from an advertiser 205, the Bluetooth controller 230 can initiate a scan request. The Bluetooth controller 230 can apply filters, such as a content filter and a whitelist filter, based on data extracted from the advertisement packet 235 and/or the scan response from the advertiser 205. The Bluetooth controller 230 can apply the content filter to evaluate specific data parameters, such as data types, values, or ranges (e.g., sensor readings, device status), and can determine whether the advertisement originates from specific device types. The Bluetooth controller 230 can apply the whitelist filter to verify whether the BD_ADDR matches an entry on a pre-approved device list. Based on the filtering results, the Bluetooth controller 230 can determine whether to proceed with further interactions, such as establishing a connection or suppressing additional scan requests.

In some embodiments, the Bluetooth controller 230 can identify application-specific data transmitted by the advertiser 205, which can include data from sensors, location services, or input events, which can be utilized by applications on the host processor 220 to classify the advertiser 205 or extract detailed advertiser-specific information. In some embodiments, the Bluetooth controller 230 can generate or retrieve a cryptographic hash value derived from the advertisement data to verify data integrity and detect duplicate packets. The hash calculation can be applied to the payload data portion of the advertisement packet 235 and, in some cases, additional fields within the packet. If the computed hash matches a previously stored hash value, indicating that the packet is a duplicate of previously received data, the Bluetooth controller 230 can discard the advertisement packet 235 without further processing.

The Bluetooth controller 230 can extract a timestamp associated with the most recent advertisement packet from each advertiser 205 to monitor advertiser activity and assess whether the advertiser 205 remains within communication range. This timestamp can be used to infer transmission periodicity and to implement prioritization logic that ranks advertisers 205 based on recent packet reception. For example, the scanner 210 may prioritize interaction with advertisers 205 that have recently transmitted advertisement packets 235. In some embodiments, where timestamps indicate that multiple consecutive advertisement packets 235 from an advertiser 205 have not been received within the expected transmission interval, the Bluetooth controller 230 can deprioritize or flag the advertiser 205 as out of range. In some embodiments, if the timestamps show a consistent and frequent transmission pattern, the Bluetooth controller 230 can assign higher priority to that advertiser 205 for immediate response or further processing. In some embodiments, if timestamps indicate excessively frequent transmissions within a short time window, the Bluetooth controller 230 can interpret this as redundant data and deprioritize the advertiser 205.

The Bluetooth controller 230 can store the identified attributes for each of the advertisers 205 in the attribute storage 225. The Bluetooth controller 230 can maintain a data structure configured to store associations between advertiser BD_ADDRs and their corresponding attributes. Each entry in the data structure can associate an advertiser's BD_ADDR as a key with a set of corresponding attributes as the value. These attributes can include, but are not limited to, the verdict of a packet content filter history, a hash computed on advertisement data, a timestamp of the last received advertisement, received signal strength indicator (RSSI), transmit power level, service indicators, manufacturer-specific data, and application-specific data, among other attributes. The Bluetooth controller 230 can dynamically update the data structure as advertisement packets 235 are received and new attributes are identified. The Bluetooth controller 230 can implement mechanisms to manage the size of the data structure, such as removing entries for advertisers 205 that have not been seen for a certain period of time or prioritizing storage of attributes based on their relevance.

The data structure can be configured to allow the Bluetooth controller 230 to perform attribute lookups for advertisers 205 based on their respective BD_ADDRs. For example, upon receiving an advertisement packet 235 from an advertiser 205, the Bluetooth controller 230 can extract the advertiser's BD_ADDR and utilize it as a key to execute a lookup operation within a data structure maintained in the attribute storage 225. The Bluetooth controller 230 can perform a comparison between the extracted BD_ADDR and existing BD_ADDR entries within the data structure. If a matching entry is identified, the Bluetooth controller 230 can retrieve one or more previously stored attributes associated with that BD_ADDR. If no matching entry is identified, the Bluetooth controller 230 can initiate alternative operations, such as generating a new entry for the advertiser 205 in the data structure and associating corresponding attributes for future reference, or discarding the advertisement packet 235, depending on the implementation.

The Bluetooth controller 230 can determine a score for the advertiser 205 upon retrieving the attributes associated with the matching BD_ADDR. The score can specify the relevance of the advertiser 205 to the scanner 210 and influence subsequent actions, such as initiating a scan request, allocating transmission power, or prioritizing tasks. For example, if the score indicates high relevance, the Bluetooth controller 230 can transmit a scan request to the advertiser 205, and if the score indicates low relevance, the Bluetooth controller 230 can suppress further scan requests or other communication attempts with the advertiser 205. The score can fall within specific ranges, such as 0-3, 4-7, and 8-10. These ranges can associate different actions or priorities with the advertiser 205, which the Bluetooth controller 230 can use to guide subsequent operations. The Bluetooth controller 230 can utilize various attributes to determine the score.

In some embodiments, the Bluetooth controller 230 can calculate a score for the advertiser 205 by applying a weighted scoring function to one or more values assigned to one or more attributes extracted from the advertisement packet 235 and/or the scan response. Each of the one or more attributes can be assigned a weight to define its relative significance based on application-specific demands, system policies, device capabilities, or network conditions. Each attribute's weighted value can contribute to an aggregated score. For example, if the application running on the host processor 220 prioritizes recent data, the timestamp attribute can receive a higher weight. The Bluetooth controller 230 can aggregate the weighted attribute values to generate a numerical score that indicates the advertiser's overall relevance or priority to the scanner 210. A higher score can indicate greater relevance and trigger actions such as initiating a scan request, adjusting transmission power, or prioritizing tasks associated with the advertiser 205. A lower score can result in deprioritization or suppression of further interactions.

In some embodiments, the Bluetooth controller 230 can calculate the score based on the verdict of the packet content filter history. For example, a history of successful content filter passes can contribute positively to the score, while repeated filter failures can reduce the score. In some embodiments, the Bluetooth controller 230 can compute a hash on the data portion of the advertisement packet 235, and in some cases, on additional fields within the packet. The computed hash can be compared to hashes of previously received advertisement data to determine whether the current advertisement packet 235 is a duplicate. If the computed hash matches a previously computed hash, it indicates that the advertisement data has already been received. The Bluetooth controller 230 can also use the hash to verify if the advertisement packet 235 corresponds to one for which a scan request was previously sent. In such cases, the duplicate advertisement packets 235 can be assigned a lower score.

In some embodiments, the Bluetooth controller 230 can evaluate the timestamp of the last received advertisement packet 235 to assess the advertiser's recent activity. For example, advertisement packets 235 with older timestamps, indicating a significant interval since the last advertisement packet was received, can result in a higher relevance score, as such advertisement packets 235 may provide information that has not yet been reported to the host processor 220. In some embodiments, advertisement packets 235 with recent timestamps can be assigned a lower score, as similar data may have been recently processed by the Bluetooth controller 230 or delivered to the host processor 220, reducing their priority in subsequent operations. In some embodiments, the Bluetooth controller 230 can maintain a separate timestamp associated with the fulfillment of a scan request (e.g., the time when a scan response was received). This separate timestamp can be used in conjunction with the timestamp of the last received advertisement packet to determine future scan requests. For example, if a scan request was recently fulfilled, the Bluetooth controller 230 can delay or suppress subsequent scan requests for a period of time. In some embodiments, the Bluetooth controller 230 can evaluate service indicators embedded in the advertisement packet to determine whether the advertiser 205 offers capabilities relevant to the scanner's operational demands. For example, advertisers providing services aligned with the scanner demands can receive higher scores. In some embodiments, application-specific data, such as sensor outputs, location details, or input events, can contribute to the score. The host processor 220 (or an application running on it) can utilize these scores to prioritize advertisers 205 based on proximity and service relevance.

The Bluetooth controller 230 can determine a priority for the advertiser 205 based on the calculated score. The Bluetooth controller 230 can compare the calculated score to predefined ranges of values, where each range corresponds to a specific priority level defined by upper and lower bound thresholds. In some embodiments, the Bluetooth controller 230 can classify the advertiser 205 as low priority if the score falls within a specific range (e.g., between 0 and 3), indicating irrelevance or undesirable characteristics. In such cases, the Bluetooth controller 230 can suppress further processing of advertisement packets 235 received from that advertiser 205. In some embodiments, the Bluetooth controller 230 can classify advertisers 205 with scores (e.g., between 4 and 7) that indicate moderate relevance. In such cases, the Bluetooth controller 230 can initiate a best-effort scan request. The host processor can then determine when to transmit the best-effort scan request based on other activities or priorities. The best-effort scan request can be defined as a scan request that may be delayed or preempted by higher-priority tasks managed by the host processor 220. The Bluetooth controller 230 can request a low-priority grant for resource access, such as shared antenna usage, from the host processor 220. In some embodiments, the Bluetooth controller 230 can classify advertisers 205 with scores (e.g., between 8 and 10) indicating significant relevance as high priority. In such cases, the Bluetooth controller 230 can transmit a high-priority scan request. The host processor can then grant high-priority access to shared resources, such as the antenna, to facilitate timely and reliable transmission. The Bluetooth controller 230 can be configured to define or dynamically adjust the threshold values for the priority ranges to adapt to changing network conditions (e.g., due to RF interference, channel congestion, etc.) or the specific demands of the application using Bluetooth.

In some embodiments, instead of or in addition to suppressing the transmission of the scan request, the Bluetooth controller 230 can adjust other transmission characteristics based on the calculated score or priority of the advertiser 205. For example, based on the calculated score, the Bluetooth controller 230 can vary the transmit power of the scan request packet. The transmit power can refer to the amount of radio frequency energy that a device, such as the Bluetooth controller 230, uses to transmit a signal, such as the scan request packet. A lower score may reduce the transmit power to decrease the scan request range, while a higher score may increase transmit power to maximize the likelihood of receiving a scan response from a more relevant advertiser 205. The specific power levels can be predefined or dynamically determined based on the score or priority. In some embodiments, based on the score, the Bluetooth controller 230 can manage access to shared resources, such as the antenna, particularly in configurations with multiple radio technologies (e.g., Bluetooth and Wi-Fi). The Bluetooth controller 230 can adjust the priority of antenna access requests based on the advertiser's score. A higher score may result in a higher priority request, granting the Bluetooth controller 230 preferential access to the antenna. A lower score may result in a lower priority request and can cause the Bluetooth controller 230 to delay the scan request if higher-priority traffic is using the antenna. In some embodiments, the Bluetooth controller 230 can use various scheduling algorithms (e.g., time division multiplexing, priority-based queuing) to manage antenna access based on priority levels.

In some embodiments, the Bluetooth controller 230 can perform filtering operations based on the data from the advertisement packet 235 and/or a scan response from a given advertiser 205, particularly when the advertisement packet 235 is received for the first time from the advertiser 205. The filtering process can initially rely on data included within the advertisement packet 235. The Bluetooth controller 230 can transmit a scan request to the advertiser 205 to retrieve a scan response, which can include additional data fields not included within the advertisement packet 235. The Bluetooth controller 230 can combine this scan response data with the original advertisement packet data to generate an enhanced data set for filtering operations. The advertisement packet data can remain relatively static across transmissions, and the scan response data from the advertiser 205 can dynamically change over time due to factors such as changes in advertiser status, sensor output, or other dynamic attributes. The Bluetooth controller 230 can update the filtering decision based on the combined data set. For example, if the advertisement packet 235 previously failed to meet filter criteria, updated data in the scan response can cause the combined data to satisfy the filtering demands upon re-evaluation. The Bluetooth controller 230 can be configured to initiate a timer to manage periodic re-evaluation of filtering decisions. Upon expiration of the timer, the Bluetooth controller 230 can transmit a new scan request to the advertiser 205 and retrieve updated scan response data. The Bluetooth controller 230 can then re-evaluate the combined data, now including the potentially updated information from the advertisement packet 235 (which may or may not have changed) and the latest scan response, to determine whether the advertiser 205 now satisfies the filtering criteria.

In some embodiments, the Bluetooth controller 230 can initiate the timer during or after transmitting a scan request. The timer can be utilized to control the timing of subsequent re-evaluations to enhance advertisement packet processing and resource allocation. Upon expiration of the timer, the Bluetooth controller 230 can re-evaluate the advertising environment, which can include processing any newly received advertisement packet and/or scan response from the advertiser 205. Based on the data set from the advertisement packet 235 and/or the scan response, the Bluetooth controller 230 can dynamically adjust filtering criteria, update the advertiser's priority score, or initiate a new scan request.

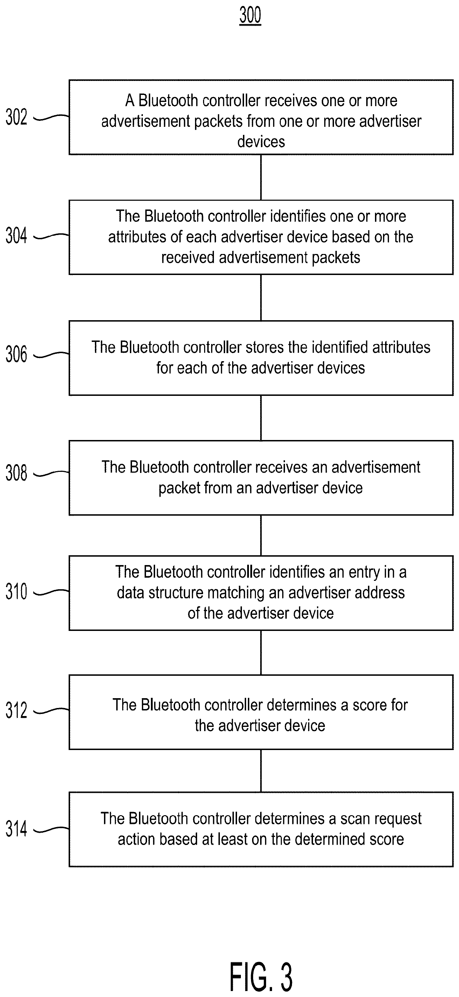

FIG. 3 illustrates an example method 300 for efficient power and bandwidth utilization during Bluetooth low energy active scans. The method 300 can be implemented using a system 100, 200, or any other features discussed in FIGS. 1-2. The method 300 can include acts 302-314. At 302, a Bluetooth controller can receive one or more advertisement packets from one or more advertiser devices. At 304, the Bluetooth controller can identify one or more attributes of each advertiser device based on the received advertisement packets. At 306, the Bluetooth controller can store the identified attributes for each of the advertiser devices. At 308, the Bluetooth controller can receive an advertisement packet from an advertiser device. At 310, the Bluetooth controller can identify an entry in a data structure matching an advertiser address of the advertiser device. At 312, the Bluetooth controller can determine a score for the advertiser device. At 314, the Bluetooth controller can determine a scan request action based at least on the determined score.

At 302, a Bluetooth controller can receive one or more advertisement packets from one or more advertiser devices. The terms advertisers and advertiser devices can be used interchangeably. In the context of Bluetooth low energy (BLE) communication, an advertiser can be referred to herein as a BLE advertiser device, and the advertisement packets can be referred to herein as BLE advertisement packets. The advertiser can be any of a broad range of devices, such as fitness trackers, smartphones, home devices, medical devices, or any other Bluetooth-enabled device that can broadcast or transmit advertisement packets. The advertisement packets are data packets that conform to the Bluetooth low energy specification and announce the presence of an advertiser. The advertisement packets can be received and processed by other Bluetooth devices, referred to as scanners or receivers. The scanners can be any of a broad range of devices, such as smartphones, tablets, laptops, desktop computers, computing systems, and any other device in which Bluetooth communication capabilities are integrated. The scanners can implement various scanning techniques, including active and passive scanning. The scanners can include a Bluetooth controller and a host processor. The Bluetooth controller can be configured to perform low-level Bluetooth communication functions, such as detecting, receiving, and processing advertisement packets. The host processor can be a processor within the scanner configured for higher-level processing. For example, the host processor can receive information from the Bluetooth controller and perform high-level communication tasks, such as executing applications and software that utilize Bluetooth communication capabilities, managing complex communication protocols, and implementing application logic related to processing the received advertisement data.

At 304, the Bluetooth controller can identify one or more attributes of each advertiser device based on the received advertisement packets. For example, the Bluetooth controller can identify one or more attributes of one or more advertisers based at least on one or more advertisement packets received via Bluetooth. The attributes can include, but are not limited to, an advertiser's Bluetooth device address (BD_ADDR) (e.g., an identifier assigned to each Bluetooth device for communication and identification), a verdict of a packet content filter history (e.g., a record of whether previous advertisement packets from a particular advertiser have passed or failed a content filter), a hash computed on advertisement data (e.g., a cryptographic hash value used for efficient comparison with previously received data, detection of duplicate advertisements, and verification of its integrity), and a timestamp of a last received advertisement (an indication of when the last advertisement packet from a particular advertiser was received to track the advertiser's activity and determine if it is still within range).

At 306, the Bluetooth controller can store the identified attributes for each of the advertiser devices. The Bluetooth controller can maintain a data structure configured to store associations between advertiser addresses (BD_ADDRs) and their corresponding attributes. The data structure can be implemented in various ways, such as a look-up table, a hash map, or a database. Each entry in the data structure can include the advertiser's BD_ADDR as a key and the associated attributes (e.g., packet content filter verdict, hash of advertisement data, timestamp, etc.) as the value. The data structure can allow the Bluetooth controller to perform rapid lookups of advertiser attributes based on their respective BD_ADDRs.

At 308, the Bluetooth controller can receive an advertisement packet from an advertiser device. For example, a specific advertiser can transmit one or more advertisement packets over Bluetooth advertising channels. The Bluetooth controller within the scanner can be configured to listen on BLE advertising channels and receive the transmitted advertisement packet. The advertisement packet can include information about the advertiser and can trigger subsequent actions by the Bluetooth controller, such as initiating a scan request for more details, updating internal records about the advertiser, or notifying the host processor of the newly discovered device.

At 310, the Bluetooth controller can identify an entry in a data structure matching an advertiser address of the advertiser device. Upon receiving an advertisement packet from a specific advertiser, the Bluetooth controller can extract the advertiser's BD_ADDR from the received packet. The Bluetooth controller can utilize the extracted BD_ADDR as a key to search the data structure. The Bluetooth controller can perform a lookup operation within the data structure by comparing the extracted BD_ADDR with stored BD_ADDR entries. If a matching BD_ADDR entry is identified, the Bluetooth controller can retrieve the one or more attributes associated with that BD_ADDR. If no matching BD_ADDR entry is identified, the Bluetooth controller can proceed with alternative actions, such as initiating a new entry in the data structure or ignoring the advertisement packet.

At 312, the Bluetooth controller can determine a score for the advertiser device. The Bluetooth controller can determine the score for the advertiser device based at least on the stored attributes associated with the matching advertiser address. The Bluetooth controller can be configured to determine the score for the advertiser using attributes stored in the data structure. Based on the calculated score, the Bluetooth controller can determine a priority for the advertiser. For example, the Bluetooth controller can determine the priority by comparing the score to predefined ranges of values, where each range corresponds to a specific priority level. These ranges can be defined by upper and lower bound thresholds. For example, scores between 0 and 3 can indicate suppressed or filtered packets. Additionally, scores between 4 and 7 can indicate that a scan request can be sent based on a best-effort basis, with the Bluetooth controller requesting a low-priority resource grant from the host processor. Furthermore, scores between 8 and 10 can indicate that a scan request is to be sent, with the Bluetooth controller requesting a high-priority resource grant from the host processor. The Bluetooth controller can define or dynamically adjust the threshold values for the priority ranges.

At 314, the Bluetooth controller can determine a scan request action based at least on the determined score. The Bluetooth controller can select between suppressing the transmission of a scan request or transmitting the scan request at a specific priority. For example, if the advertiser's score is between 0 and 3, the Bluetooth controller can suppress the transmission of the scan request. If the score is between 4 and 7, the Bluetooth controller can transmit the scan request at a low (or first) priority. If the score is between 8 and 10, the Bluetooth controller can transmit the scan request at a high (second) priority. The high-priority scan request can be given preferential access to the shared antenna resource, such that they are transmitted more quickly and reliably, while low-priority scan requests can be subject to delays or preemption if other higher-priority traffic is present.

In some embodiments, the Bluetooth controller can adjust the transmit power of the scan request based on the calculated score. The transmit power can refer to the amount of radio frequency energy that a device, such as the Bluetooth controller, uses to transmit a signal, such as the scan request packet. A lower score may reduce the transmit power to decrease the scan request range, while a higher score may increase transmit power to maximize the likelihood of receiving a scan response from a more relevant advertiser. The specific power levels can be predefined or dynamically determined based on the score or priority. In some embodiments, based on the score, the Bluetooth controller can manage access to shared resources, such as the antenna, particularly in configurations with multiple radio technologies (e.g., Bluetooth and Wi-Fi). The Bluetooth controller can adjust the priority of antenna access requests based on the advertiser's score. A higher score may result in a higher priority request, granting the Bluetooth controller preferential access to the antenna. A lower score may result in a lower priority request and can cause the Bluetooth controller to delay the scan request if higher-priority traffic is using the antenna. In some embodiments, the Bluetooth controller can use various scheduling algorithms (e.g., time division multiplexing, priority-based queuing) to manage antenna access based on priority levels.

In some embodiments, the Bluetooth controller can initiate a timer upon suppressing the transmission of a scan request. The timer can periodically trigger a re-evaluation of an advertising environment. Upon expiration of the timer, the Bluetooth controller can be configured to re-evaluate the advertising environment, which can include processing any subsequent advertisement packet and/or scan response received from the advertiser. Based at least on the subsequent advertisement packet and/or scan response, the Bluetooth controller can determine whether to suppress the transmission of a subsequent scan request or transmit the subsequent scan request at a specific priority level. The Bluetooth controller can configure or dynamically adjust the timer interval to control the frequency of these re-evaluations.

In some embodiments, the Bluetooth controller can initiate the timer during a scan request transmission period. For example, the Bluetooth controller can initiate the timer to dynamically adjust the transmission parameters (e.g., transmit power, scan interval) based on changes in the surrounding environment. Upon expiration of the timer, the Bluetooth controller can re-evaluate ongoing scan request transmissions by processing any subsequent advertisement packet and/or scan response received from the advertiser. Based at least on the data received, the Bluetooth controller can adjust the ongoing scan request transmissions.

In some embodiments, the Bluetooth controller can initiate the timer after transmitting a scan request to regulate the processing and re-evaluation of subsequent advertisement packets and/or scan responses from the advertiser. In some embodiments, the timer can control the minimum time between scan requests. For example, the time interval can provide a window for other Bluetooth devices to advertise. In some embodiments, upon expiration of the timer, the Bluetooth controller can determine whether to initiate a new scan request or wait for another trigger, such as user input or external interaction, to initiate the scan request.

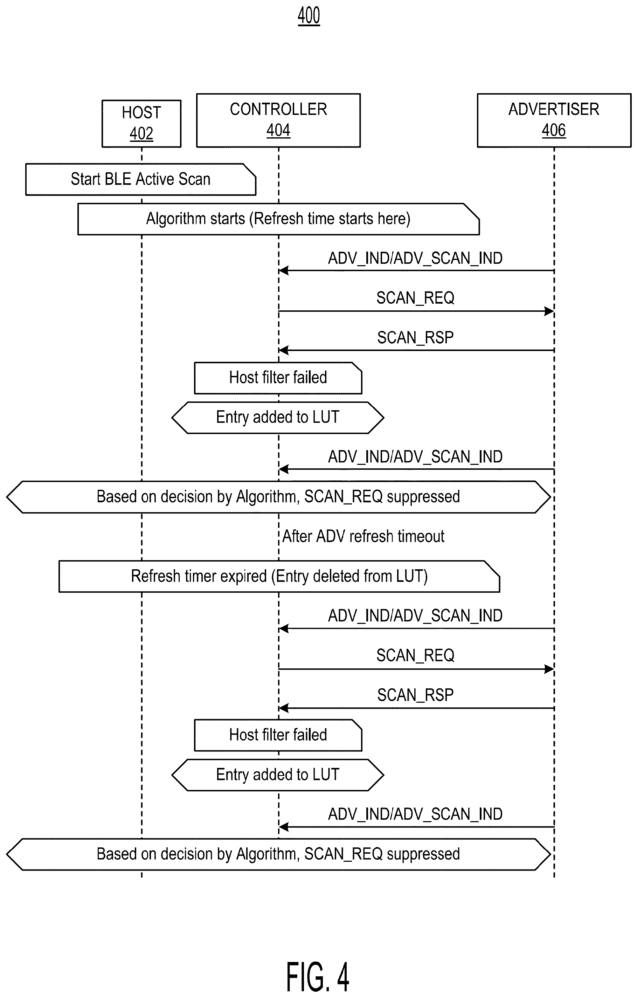

FIG. 4 illustrates another example method 400 for efficient power and bandwidth utilization during Bluetooth low energy (BLE) active scans, as described in connection with FIGS. 2-3. A host 402 of a scanner can initiate a BLE active scan. For example, the host 402 can execute an application that configures scan parameters, such as the scan interval, scan window, and target advertiser criteria, among others. Once the parameters are set, the host 402 can instruct a controller 404, which can be coupled to the host 402, to start the scanning process. The controller 404 can then manage the low-level operations to filter advertisement packets. The controller 404 can receive an advertisement packet (e.g., ADV_IND or ADV_SCAN_IND) from an advertiser 406. FIG. 4 depicts a first instance of the controller 404 receiving an advertisement packet from the advertiser 406. Upon receiving the first advertisement packet, the controller 404 can transmit a scan request packet (SCAN_REQ) to the advertiser 406. The controller 404 can then receive a scan response packet (SCAN_RSP) from the advertiser 406, which induces additional information. During the initial interaction, the controller 404 can be configured to perform filtering on the data from the advertisement packet and/or the scan response.

In this configuration, the controller 404 can determine that the advertiser fails to satisfy one or more filtering criteria. In some embodiments, the controller 404 can evaluate the data portion of the advertisement packet and/or scan response to verify whether the received data satisfies specific criteria defined by the scanner, such as the type of data being advertised (e.g., sensor readings, device status) or specific values within the data. For example, a content filter can be configured to allow advertisement packets that include data within a specified range or originate from specific types of devices. In some embodiments, the controller 404 can determine if the advertiser's Bluetooth device address (BD_ADDR) is present on a pre-approved list (e.g., the whitelist). The whitelist can include BD_ADDRs of devices that the scanner is interested in. If the advertiser's BD_ADDR is not on the whitelist, the controller 404 can identify the advertiser as failing this filter.

Once the controller 404 determines whether the advertiser passes or fails the filtering criteria, the controller 404 can update a data structure by adding an entry for the advertiser 406. The entry can store the advertiser's address (e.g., BD_ADDR) along with the attributes extracted from the advertisement packet and/or scan response. This stored information can be referenced for future interactions with the advertiser 406. For example, if the controller 404 receives a subsequent advertisement packet from the same advertiser 406, the controller 404 can retrieve the stored attributes from the data structure and use them to determine whether to transmit further scan requests or take other actions, such as suppressing or prioritizing the requests.

In some embodiments, the controller 404 can implement a timer, such as a refresh timer, to periodically trigger a re-evaluation of the advertising environment and the data stored about advertisers, as the characteristics of advertisers (e.g., services offered, data transmitted) can change over time. Upon expiration of the refresh timer, the controller 404 can perform several actions. For example, the controller 404 can delete an entry associated with a specific advertiser from the data structure. This deletion can occur if the advertiser 406 has not been detected for a predefined period, indicating that the advertiser 406 is no longer active or relevant. In some embodiments, upon timer expiration, the controller 404 can re-evaluate the advertiser's data based on new information. For example, the controller 404 can process a newly received advertisement packet from the advertiser 406, a new scan response obtained via a scan request, or a combination of both. The controller 404 can update the stored attributes, scores, and filtering results based on the new data. The update can include reapplying filters, recalculating scores, and executing other processing steps to specify the advertiser's latest characteristics. In some embodiments, the re-evaluation process can lead to different actions than those previously taken, such that the controller 404 can adapt dynamically to changes in the advertiser's transmitted data.

It should be noted that certain passages of this disclosure may reference terms such as "first" and "second" in connection with devices, modes of operation, transmit chains, roles, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected (which may refer to electronic or communicative coupling or connection, such as for the purposes of data transmission) include indirect and direct couplings and connections.

While the disclosure has been described with respect to specific embodiments, one skilled in the art will recognize that numerous modifications are possible. For instance, although specific examples of rules (including triggering conditions and/or resulting actions) and processes for generating suggested rules are described, other rules and processes can be implemented. Embodiments of the disclosure can be realized using a variety of computer systems and communication technologies including but not limited to specific examples described herein.

Embodiments of the present disclosure can be realized using any combination of components and/or programmable processors and/or other programmable devices. The various processes described herein can be implemented on the same processor or different processors in any combination. Where components are described as being configured to perform certain operations, such configuration can be accomplished, e.g., by designing electronic circuits to perform the operation, by programming programmable electronic circuits (such as microprocessors) to perform the operation, or any combination thereof. Further, while the embodiments described above may make reference to specific hardware and software components, those skilled in the art will appreciate that different combinations of hardware and/or software components may also be used and that particular operations described as being implemented in hardware might also be implemented in software or vice versa.

Computer programs incorporating various features of the present disclosure may be encoded and stored on various computer readable storage media; suitable media include magnetic disk or tape, optical storage media such as compact disk (CD) or DVD (digital versatile disk), flash memory, and other non-transitory media. Computer readable media encoded with the program code may be packaged with a compatible electronic device, or the program code may be provided separately from electronic devices (e.g., via Internet download or as a separately packaged computer-readable storage medium).

Thus, although the disclosure has been described with respect to specific embodiments, it will be appreciated that the disclosure is intended to cover all modifications and equivalents within the scope of the following claims.

It should be understood that the disclosed embodiments are not representative of all claimed innovations. As such, certain aspects of the disclosure have not been discussed herein. Alternate embodiments that may not have been presented for a specific portion of the innovations or that further undescribed alternate embodiments may be available for a portion is not to be considered a disclaimer of those alternate embodiments. Thus, it is to be understood that other embodiments can be utilized and functional, logical, operational, organizational, structural and/or topological modifications may be made without departing from the scope of the disclosure. As such, all examples and/or embodiments are deemed to be non-limiting throughout this disclosure.

Some embodiments described herein relate to methods. It should be understood that such methods can be computer implemented methods (e.g., instructions stored in memory and executed on processors). Where methods described above indicate certain events occurring in a certain order, the ordering of certain events can be modified. Additionally, certain of the events can be performed repeatedly, concurrently in a parallel process when possible, as well as performed sequentially as described above. Furthermore, certain embodiments can omit one or more described events.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for a specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, a field-programmable gate array (FPGA), and/or an application-specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as those produced by a compiler, code used to produce a web service, and files containing higher-level instructions that are executed by a computer using an interpreter. For example, embodiments can be implemented using Python, Java, JavaScript, C++, and/or other programming languages and software development tools. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features may not necessarily be limited to a particular order of execution, but rather, any number of threads, processes, services, servers, and/or the like that may execute serially, asynchronously, concurrently, in parallel, simultaneously, synchronously, and/or the like in a manner consistent with the disclosure. As such, some of these features may be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood as open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

## Claims

1. A system, comprising:
one or more processors, coupled with memory, in communications over Bluetooth with one or more BLE advertiser devices, to:
identify one or more attributes of the one or more BLE advertiser devices based at least on one or more advertisement packets received from the one or more BLE advertiser devices;
store the one or more attributes for each of the one or more BLE advertiser devices;
receive, from a BLE advertiser device of the one or more BLE advertiser devices, an advertisement packet;
determine, based at least on the one or more attributes of the BLE advertiser device, a score of the BLE advertiser device; and
determine, based at least on the score, to suppress transmission of a scan request to the BLE advertiser device.

2. The system of claim 1, wherein the one or more processors are further configured to
determine a priority of the BLE advertiser device based at least on the score of the BLE advertiser device being within one or more predefined ranges of values, wherein each predefined range of values corresponds to a respective priority; and
suppress the transmission of the scan request based at least on the determined priority.

3. The system of claim 1 or 2, wherein the one or more processors are further configured to
define the one or more predefined ranges of values for determining the priority using one or more thresholds.

4. The system of any one of the claims 1 to 3, wherein the one or more processors are further configured to
receive, from a second BLE advertiser device of the one or more BLE advertiser devices, a second advertisement packet;
determine, based at least on one or more attributes of the second BLE advertiser device, a score of the second BLE advertiser device; and
determine, based at least on the score, to transmit a second scan request at a priority.

5. The system of claim 4, wherein the one or more processors are further configured to
transmit the second scan request at a first priority based at least on the score of the second BLE advertiser device satisfying a predefined range of values associated with the first priority.

6. The system of claim 4, wherein the one or more processors are further configured to
transmit the second scan request at a second priority based at least on the score of the second BLE advertiser device satisfying a predefined range of values associated with the second priority, wherein the second priority is distinct from a first priority.

7. The system of any one of the claims 1 to 6, wherein
the one or more attributes comprise at least one of a BLE advertiser device's Bluetooth device address, a verdict of a packet content filter history of a given advertisement, a hash computed on advertisement data, or a timestamp of a last received advertisement.

8. The system of any one of the claims 1 to 7, wherein the one or more processors are further configured to
maintain a data structure, the data structure configured to store associations between advertiser addresses and the one or more attributes of the one or more BLE advertiser devices.

9. The system of any one of the claims 1 to 8, wherein the one or more processors are further configured to
upon receiving the advertisement packet from the BLE advertiser device, identify an entry in the data structure matching an advertiser address of the BLE advertiser device; and
retrieve the one or more attributes associated with the matching advertiser address entry.

10. The system of any one of the claims 1 to 9, wherein the one or more processors are further configured to
initiate, upon suppressing the transmission of the scan request, a timer; and
upon expiration of the timer, determine, based at least on receiving a second advertisement packet or a scan response from the BLE advertiser device of the one or more BLE advertiser devices, to one of suppressing transmission of a subsequent scan request or transmitting the subsequent scan request at a priority.

11. A device, comprising:
a Bluetooth controller, coupled with a host processor, configured to:
store one or more attributes of one or more advertiser devices based at least on one or more advertisement packets received from the one or more advertiser devices;
receive, from an advertiser device of the one or more advertiser devices, an advertisement packet;
determine a score of the advertiser device based at least on the one or more attributes of the advertiser device; and
determine, based at least on the score, to transmit a scan request at a priority to the advertiser device.

12. The device of claim 11, wherein the Bluetooth controller is further configured to:
determine a priority of the advertiser device based at least on the score of the advertiser device being within one or more predefined ranges of values, wherein each predefined range of values corresponds to a respective priority; and
transmit the scan request based at least on the determined priority;
wherein in particular
the Bluetooth controller is further configured to
define the one or more predefined ranges of values for determining the priority using one or more thresholds; and
adjust transmit power of the scan request based at least on the determined priority.

13. The device of claim 11 or 12, further comprising at least one of the following features:
(A) the Bluetooth controller is further configured to
transmit the scan request at a first priority based at least on the score of the advertiser device satisfying a predefined range of values associated with the first priority;
(B) the Bluetooth controller is further configured to
transmit the scan request at a second priority based at least on the score of the advertiser device satisfying a predefined range of values associated with the second priority, wherein the second priority is distinct from a first priority;
(C) the one or more attributes comprise at least one of an advertiser device's Bluetooth device address, a verdict of a packet content filter history of a given advertisement, a hash computed on advertisement data, or a timestamp of a last received advertisement; and
(D) the Bluetooth controller is further configured to
maintain a data structure, the data structure configured to store associations between advertiser addresses and the one or more attributes of the one or more advertiser devices; wherein in particular
the Bluetooth controller is further configured to
upon receiving the advertisement packet from the advertiser device, identify an entry in the data structure matching an advertiser address of the advertiser device; and
retrieve the one or more attributes associated with the matching advertiser address entry.

14. The device of any one of the claims 11 to 13, wherein the Bluetooth controller is further configured to
initiate, upon transmitting the scan request, a timer; and
upon expiration of the timer, determine, based at least on receiving a second advertisement packet or a scan response from the advertiser device of the one or more advertiser devices, to one of suppressing transmission of a subsequent scan request or transmitting the subsequent scan request at the priority.

15. A method, comprising:
identifying, by a Bluetooth controller, one or more attributes of one or more advertiser devices based at least on one or more advertisement packets received from the one or more advertiser devices;
storing, by the Bluetooth controller, the one or more attributes for each of the one or more advertiser devices;
receiving, by the Bluetooth controller, from an advertiser device of the one or more advertiser devices, an advertisement packet;
determining, by the Bluetooth controller, based at least on the one or more attributes of the advertiser device, a score of the advertiser device; and
determining, by the Bluetooth controller, based at least on the score, to one of suppressing transmission of a scan request, transmitting the scan request at a priority, or adjusting transmit power of the scan request.
